# DEMANDE DE BREVET EUROPEEN

(11) **EP 3 637 765 A1**
(43) Date de publication de la demande: **15.04.2020**
(21) Numéro de dépôt: 19202860.3
(22) Date de dépôt: 11.10.2019
(51) Int. Cl.: H04N 19/117, H04N 19/132, H04N 19/14, H04N 19/146, H04N 19/17, H04N 19/187, H04N 19/167, H04N 19/33, H04N 19/85, H04N 19/59, G06T 7/11, G06T 7/194

(54) **OPTIMISATION D'UN SOUS-ÉCHANTILLONNAGE INTERVENANT AVANT LE CODAGE D'IMAGES EN COMPRESSION**

(30) Priorité: 12.10.2018 FR 1859493
(71) Demandeur: ATEME, 78140 Velizy Villacoublay (FR)
(72) Inventeur: PAROIS, Ronan, 35700 RENNES (FR)
(74) Mandataire: Plasseraud IP

(57) **Abrégé**

L'invention se situe dans le domaine du codage de données d'image, scalable en résolution d'image, tel que à partir d'un signal source de résolution d'image maximale, on opère un ou plusieurs sous-échantillonnages successifs vers une résolution d'image minimale, en vue de coder une couche de base (L0) correspondant à cette résolution minimale, la couche de base (L0) servant de référence à une ou plusieurs couches de rehaussement (Ll, L2) destinées à être utilisées pour un décodage auprès d'un terminal d'écran à résolution d'image supérieure à la résolution d'image minimale. Ainsi, à partir desdits sous-échantillonnages successifs, on construit la couche de base (L0) et la ou les couches de rehaussement (Ll, L2), puis prépare un flux binaire codé, à transmettre, comportant des données de la couche de base et de la ou des couches de rehaussement. En particulier, l'étape de sous-échantillonnage comporte l'application d'un filtre passe-bas, adaptatif, aux données d'image issues du sous-échantillonnage pour limiter un effet de repliement spectral.

## Description

La présente invention concerne le domaine du codage/décodage vidéo, notamment en compression.

Plus particulièrement, l'invention vise à améliorer l'efficacité d'un codage basé sur une extension scalable d'une technique de codage donnée. Par exemple, dans le codage vidéo normalisé HEVC (« High Efficiency Video Coding »), l'extension (SHVC) de cette technique de codage permet de recevoir et décoder les données d'image sur différents terminaux ayant des résolutions d'écran respectives, un terminal ayant un écran de résolution faible nécessitant moins de données à utiliser pour le décodage. Ainsi, un terminal de résolution minimale ne nécessite qu'un jeu minimal de données, ce jeu minimal étant dit « couche de base », tandis qu'un terminal de résolution plus élevée nécessite la couche de base précitée ainsi qu'une ou plusieurs autres couches supplémentaires. On entend ainsi par « scalable » le fait que ce type de codage/décodage prenne en charge (en plus du codage/décodage en compression) ces différentes couches.

Une telle technique de codage/décodage « scalable » permet de répondre aux nouvelles tendances de consommation vidéo, et des contraintes qui en découlent. Pour les consommateurs, cette nouvelle tendance se traduit par la possibilité de regarder des contenus vidéos sur des terminaux pouvant présenter une qualité de restitution d'image très différente (télévision, ordinateur portable, smartphone, tablette). Ces nouvelles contraintes auxquelles doivent répondre les standards de compression et de vidéos concernent l'efficacité de codage, la rapidité de traitement, et la possibilité de diffuser un contenu vidéo sur un ou plusieurs canaux. En outre, la définition de nouveaux formats d'images s'ajoute aux contraintes existantes, et consistent en l'accroissement d'une ou plusieurs caractéristiques composant la vidéo, comme par exemple la résolution d'image pour le format UHD (« Ultra High Définition »), la capture et l'affichage d'images à haute dynamique de luminance pour le format HDR (« High Dynamic Range »), ou encore la fréquence des images pour le format HFR (« High Frame Rate »).

Ces nouveaux formats améliorent l'expérience utilisateur mais, pour répondre aux contraintes techniques de compression et diffusion efficaces des contenus vidéos, le codage vidéo scalable reste à optimiser.

Plus précisément, le codage vidéo scalable permet de générer un flux binaire, à partir d'une unique source vidéo, et contenant plusieurs formats de cette source vidéo. Suivant le type de scalabilité, spatiale ou temporelle par exemple, la vidéo sera codée dans le flux binaire suivant différentes résolutions ou fréquences d'images.

Chaque couche générée correspond généralement à un format vidéo, et dans le cas de la scalabilité spatiale, elle se réfère à une résolution donnée. L'architecture d'un codage scalable est définie par la couche de base précitée, traitant la plus petite résolution. Elle sert de référence aux couches traitant les résolutions supérieures, également appelées « couches de rehaussement ».

Ces couches de rehaussement sont classées par résolution selon un ordre croissant en partant de la couche de base. Chacune des couches de rehaussement peut exploiter ou fournir des informations de codage aux couches de rehaussement inférieures ou supérieures. Une couche est dite « prédite » si elle exploite des informations d'une autre couche. Une couche est dite « couche de référence » si elle fournit des informations à une autre couche. Ainsi, l'exploitation de codage d'une couche de référence par une couche prédite est possible. Cette exploitation est appelée « prédiction inter-couches ». Elle permet d'améliorer l'efficacité de codage au regard d'un codage monocouche équivalent (même résolution et même paramètre de codage).

L'efficacité de prédiction dépend à la fois des outils de prédiction eux-mêmes, mais également de la qualité des informations de codage. Ces informations de codage transitant d'une couche à l'autre par conversion doivent correspondre au format de destination. Ces mécanismes et paramètres de conversion sont définis dans les standards de compression vidéo.

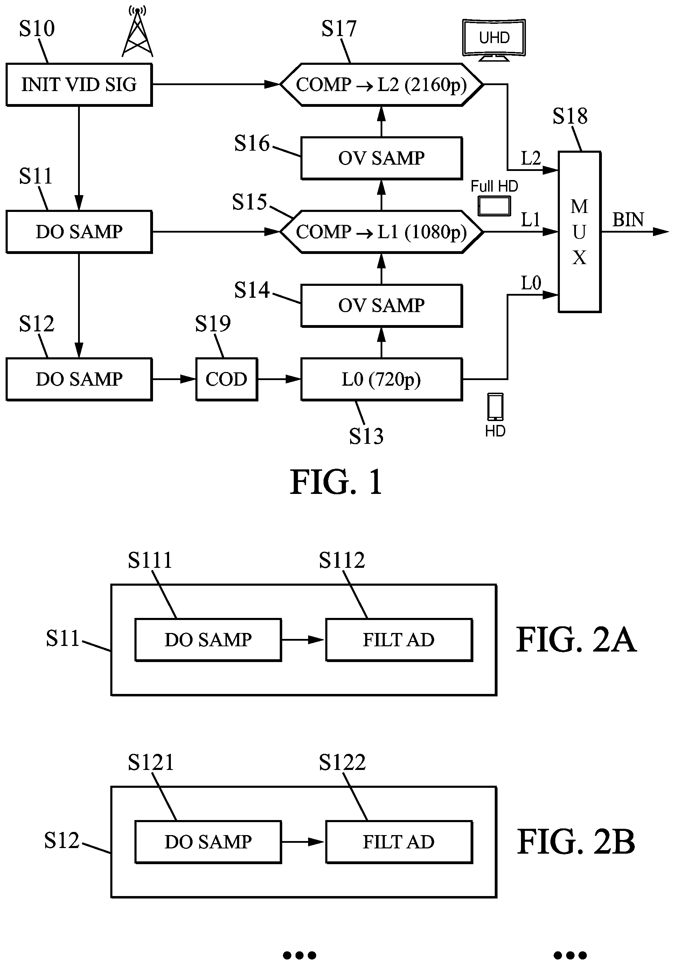

On décrit plus en détail en référence à la figure 1 un procédé habituellement mis en œuvre auprès d'une tête de réseau, pour produire une couche de base L0 (destinée à un écran de terminal de faible résolution, type smartphone ou autre) et des couches de rehaussement L1, L2 (destinées à des écrans de terminaux de résolutions plus élevées, type écran d'ordinateur, de télévision, respectivement, ou autres).

Ainsi, une conversion des données de la source vidéo est appliquée en tête de réseau sur les couches inférieures L0, L1 afin d'obtenir les formats souhaités pour les faibles résolutions. Pour une scalabilité spatiale, elle correspond à un sous-échantillonnage DO SAMP (pour « down sampling » en anglais).

Dans l'exemple de codage vidéo scalable (par exemple selon l'extension scalable de la norme HEVC), illustré sur la figure 1, on obtient en sortie un flux binaire BIN comprenant trois résolutions distinctes (2160p, 1080p, 720p).

Ainsi, plusieurs couches interdépendantes sont générées à partir d'un signal vidéo initial source (non compressé à l'étape S10).

Ici, trois couches L0, L1, et L2 (S13, S15, S17) sont générées comme présenté ci-après :
- Les deux premières, L0 et L1, sont encodées à partir d'une succession d'opérations de sous-échantillonnage (étapes S11, S12) effectuées sur le signal vidéo initial non compressé jusqu'à atteindre la couche de base L0 à l'étape S13. Ces opérations de sous-échantillonnage permettent d'amener la résolution vidéo initiale (2160p ou plus généralement « ultra haute définition ») vers des résolutions inférieures, ici 1080p, puis 720p, correspondant respectivement aux couches L1 et L0. La couche L0 (construite à l'issue de l'étape S13) de plus basse résolution est donc la couche de base. Elle est donc utilisée comme couche de référence pour les couches supérieures L1 et L2, de rehaussement. La couche L1 (étape S15) est à la fois une couche de rehaussement, et une couche de référence pour la couche L2 ;
- Après ces opérations de sous-échantillonnage, partant de la couche de base L0, des prédictions inter-couches sont estimées, chacune, par le biais d'une opération de sur-échantillonnage pour atteindre un niveau de résolution supérieure (étape S14) et de comparaison avec le signal vidéo source à cette même résolution supérieure, afin de construire une couche de rehaussement L1 et obtenir éventuellement des informations complémentaires sur des vecteurs de mouvement à cette résolution pour du codage inter-images par exemple ;
- On poursuit ainsi ces sur-échantillonnages successifs (étape S16) avec comparaisons (S17) avec le signal source de même résolution jusqu'à atteindre la couche de résolution la plus élevée (L2 dans l'exemple illustré), et ce en partant des couches inférieures (L0 et L1) vers la couche immédiatement supérieure (L2).

Ces opérations de sur-échantillonnage participent ainsi à la construction des couches de rehaussement. Chaque couche de rehaussement correspond à un ajout d'informations de codage, supplémentaires par rapport aux informations données par les couches inférieures.

Plus précisément, la « comparaison » avec les images sources de même résolution met en œuvre des opérations de prédiction inter-couches pour exploiter les redondances d'informations éventuelles entre les couches. Ainsi, un sur-échantillonnage est appliqué afin de comparer des informations sur une même résolution. Par exemple, dans le cas d'une prédiction inter-couches de mouvement, les coordonnées du champ de vecteurs de mouvement de la couche de référence (de basse résolution) sont redimensionnées par sur-échantillonnage afin de pouvoir être utilisées par la couche prédite (de plus haute résolution).

L'ensemble des données est ensuite envoyé vers un multiplexeur (étape S18) permettant d'obtenir en sortie un unique flux binaire (BIN) contenant les données L0, L1, L2 pour trois résolutions différentes dans l'exemple illustré.

De cette façon, lors du décodage vidéo à la résolution élevée (2160p), un décodeur reconstruit le signal vidéo à cette résolution à partir des informations de codage de la couche L2, mais aussi des informations de codage présentes dans les couches inférieures correspondant aux résolutions plus faibles (1080p et 720p par exemple). Dans le cas d'un décodage pour un écran de résolution 1080p, la couche L1 est reconstruite selon les informations de codage de la couche L1, mais aussi selon celles de la couche L0.

Ainsi, le mécanisme de sous-échantillonnages successifs S11, S12 permet de réduire progressivement la résolution d'image jusqu'à atteindre l'image de plus petite résolution, qui va être codée elle-même en compression (à l'étape S19 de la figure 1) pour constituer la couche de base L0. On voit, d'après la construction des couches supérieures, qu'une mauvaise qualité de couche L0 a une influence sur toutes les couches de niveau supérieur L1, L2.

Ainsi, il apparait un besoin d'améliorer l'efficacité de la prédiction inter-couches, et de faire en sorte que les informations de codage obtenues dans la couche L0 (ou toutes autres couches de référence) bénéficient au mieux aux couches prédites de niveau supérieur.

La présente invention vient améliorer la situation.

Elle propose à cet effet un procédé de codage de données d'image, scalable en résolution d'image, comportant les étapes :
- A partir d'un signal source de résolution d'image maximale, opérer un ou plusieurs sous-échantillonnages successifs vers une résolution d'image minimale, en vue de coder une couche de base (référence L0 de la figure 1) correspondant à ladite résolution minimale, la couche de base (L0) servant de référence à une ou plusieurs couches de rehaussement (L1, L2) destinées à être utilisées pour un décodage auprès d'un terminal d'écran à résolution d'image supérieure à la résolution d'image minimale,
- A partir desdits sous-échantillonnages successifs, construire la couche de base (L0) et la ou les couches de rehaussement (L1, L2),
- Préparer un flux binaire codé, à transmettre, comportant des données de la couche de base et de la ou des couches de rehaussement.

En particulier, l'étape de sous-échantillonnage comporte l'application d'un filtre passe-bas, adaptatif, aux données d'image issues du sous-échantillonnage pour limiter un effet de repliement spectral.

Ainsi, la qualité de la couche L0, et par conséquent, de toutes les couches L1, L2 dont la construction dépend, est améliorée par rapport à l'art antérieur.

Bien entendu, la construction de la ou des couches de rehaussement (L1, L2) s'effectue, par rapport à la couche de base (L0), pour des couches (L1, L2, etc.) qui requièrent un sous-échantillonnage par rapport au contenu source. Si un terminal demande directement la résolution du contenu source, c'est ce dernier qui lui est transmis.

En effet, le mécanisme de sous-échantillonnage permet de réduire progressivement la résolution d'une vidéo en supprimant une partie des pixels des images constituant cette vidéo. Toutefois, un tel sous-échantillonnage entraîne un phénomène d'aliasing (ou « repliement spectral ») qui se manifeste sur les images par une dégradation de la qualité d'image en particulier dans les zones de contraste. Pour surmonter ce phénomène d'aliasing, on pourrait utiliser un filtre passe-bas en amont de l'opération de sous-échantillonnage.

La complexité d'un tel filtre passe-bas doit être suffisamment faible pour économiser l'utilisation de ressources matérielles nécessaires au processus de codage de manière générale, mais doit être aussi élevée pour que la prédiction inter-couches reste performante, et ce au moins autant que d'autre traitements en compression (par exemple les prédictions intra-images et inter-images).

Ainsi, dans le cadre du codage scalable, ce filtre de sous-échantillonnage doit répondre à plusieurs contraintes. Sa complexité doit être suffisante déjà pour supprimer l'aliasing, tout en étant compatible avec les ressources matérielles disponibles du codeur. Ensuite, il doit permettre l'optimisation de l'efficacité de codage d'un point de vue global. En effet, l'efficacité de codage est améliorée par l'utilisation de la prédiction inter-couches, dépendant elle-même des informations de codage des couches de référence. Enfin, la qualité des informations de codage des couches de référence dépend de l'opération de sous-échantillonnage réalisée sur la source vidéo. Le codage des couches de référence n'étant pas prévisible simplement, il n'existe pas aujourd'hui de modèle de filtre de sous-échantillonnage permettant d'assurer un optimum d'efficacité de codage pour chaque image ou chaque région d'images.

L'invention propose alors un filtre de sous-échantillonnage qui est en particulier adaptatif, et permettant d'atteindre alors cet optimum d'efficacité de codage pour chaque image ou région d'images (selon la métrique dite « de Bjontegaard » comme on le verra plus loin).

On peut prévoir un filtre adaptatif qui se combine directement au signal à sous-échantillonner par convolution, par exemple un filtre de type à réponse impulsionnelle finie, dans une forme de réalisation.

Plus particulièrement, ce filtre à réponse impulsionnelle finie peut être de type choisi parmi au moins :
- Un filtre à fenêtre de Kaiser-Bessel,
- Un filtre bicubique,
- Un filtre bilinéaire,
- Un filtre d'interpolation,
présentant ainsi une palette de types de filtres plus ou moins « agressifs » et « lissant » ainsi plus ou moins les textures d'image.

On peut opérer alors une pré-analyse d'image avant sous-échantillonnage pour sélectionner un type de filtre adaptatif en fonction d'un ou plusieurs critères prédéterminés.

Dans une forme de réalisation possible de tels critères, le type de filtre adaptatif peut être sélectionné pour une image ou région d'image selon au moins un critère parmi :
- Une résolution d'image avant sous-échantillonnage,
- Une fréquence d'images du signal source,
- Un débit de codage des images,
- Une importance à accorder à une ou plusieurs régions d'intérêt dans chaque image courante.

Typiquement, l'importance à accorder à une région d'intérêt peut être quantifiée par un score de complexité de texture dans cette région.

Selon une réalisation possible, cette importance à accorder à une région d'intérêt dans une image courante peut être mesurée par :
- une détermination d'une carte de profondeurs dans l'image courante, pour identifier une pluralité de plans superposés,
- sur chacun des plans identifiés, une détection et une quantification de flou,
- et l'attribution d'un score à une région en fonction :
   * d'une profondeur du plan dans lequel se situe cette région (entre un premier plan et un arrière-plan typiquement), et
   * une netteté de l'image dans ce plan.

Ainsi, pour des régions nettes de premiers plans, un filtre bicubique peut être sélectionné, tandis que pour des régions d'arrière-plan nettes et/ou de premiers plans floues, un filtre bilinéaire est utilisé, et sinon un filtre d'interpolation peut être utilisé.

Dans le cadre de la sélection d'un filtre à fenêtre de Kaiser-Bessel, on peut choisir le paramétrage d'un tel filtre dans une gamme de paramétrages (définissant des coefficients du filtre), en fonction de l'un des critères parmi une résolution d'image avant sous-échantillonnage et une fréquence d'images du signal source.

Finalement, les coefficients du filtre à fenêtre de Kaiser-Bessel peuvent être choisis en fonction d'un paramétrage sélectionné dans la gamme précitée, en fonction de l'autre desdits critères parmi une résolution d'image avant sous-échantillonnage et une fréquence d'images du signal source.

En complément ou en variante, un filtre bicubique peut être sélectionné si le débit de codage de la couche de base est supérieur à un seuil, et sinon, un filtre bilinéaire est sélectionné.

Par exemple, un tel seuil peut être de 2 Mbits/sec.

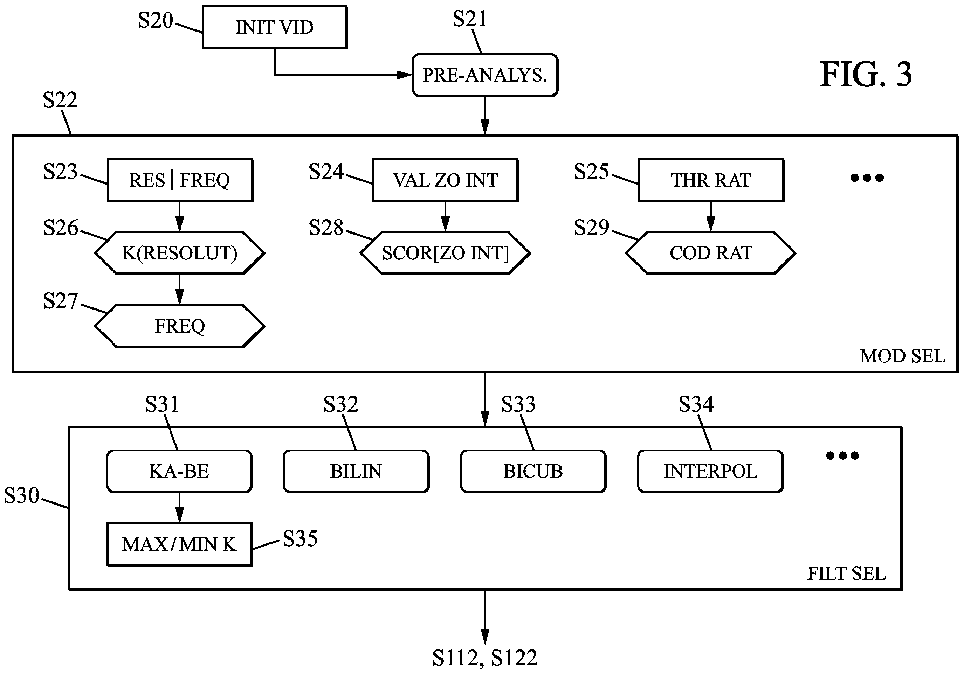

La présente invention vise aussi un programme informatique comportant des instructions pour la mise en œuvre du procédé ci-avant, lorsque ces instructions sont exécutées par un processeur d'un circuit de traitement. Un algorithme d'un tel programme informatique peut être illustré typiquement par les figures 2A, 2B et 3 commentées ci-après.

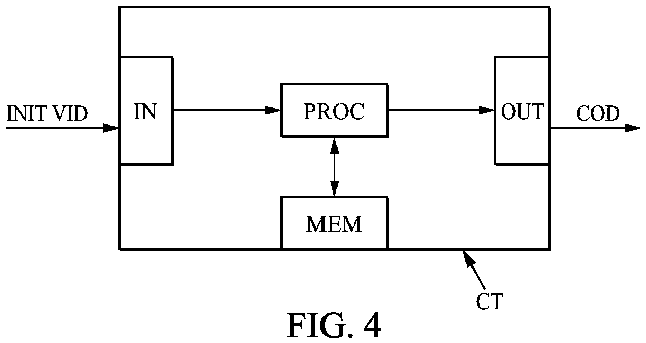

La présente invention vise aussi un dispositif de codage de données d'image, scalable en résolution d'image, comportant un circuit de traitement pour la mise en œuvre du procédé ci-avant. En référence à la figure 4, un tel circuit de traitement CT peut comporter typiquement :
- Une entrée IN pour recevoir les données d'images initiales du signal source,
- Une mémoire MEM pour stocker au moins temporairement ces données, et plus particulièrement des instructions d'un programme informatique au sens de l'invention, ainsi que des données de filtres (types de filtres et jeux de coefficients appropriés, par exemple),
- Un processeur PROC pour traiter les données d'images en vue de pré-analyser les images et sélectionner en fonction de cette pré-analyse au moins un type de filtre (ou plusieurs types pour plusieurs régions dans une même image), avec un jeu de coefficients associés, qui sont appropriés à l'image ou à la région d'image. A cet effet, le processeur PROC est agencé pour coopérer avec la mémoire MEM, notamment pour lire les instructions du programme informatique et les exécuter,
- Et une sortie OUT pour délivrer des données d'images sous-échantillonnées et filtrées par le filtre ainsi sélectionné et construit, ces données pouvant ensuite être codées (comme illustré aux étapes S19, S15 et S17 présentées précédemment en référence à la figure 1).

D'autres avantages et caractéristiques de l'invention apparaitront à la lecture d'exemples de réalisation donnés ci-après et à l'examen des dessins annexés sur lesquels :
- La figure 1 illustre un codage scalable classique,
- Les figures 2A, 2B montrent la combinaison du filtrage de bruit d'aliasing avec une opération de sous-échantillonnage, à titre purement illustratif,
- La figure 3 illustre un exemple de sélection d'un type de filtre parmi un ensemble de filtres et de coefficients de filtres possibles, en fonction de critères identifiés dans les images à traiter,
- La figure 4 illustre schématiquement un dispositif au sens de l'invention.

La présente invention se situe dans le cadre d'un procédé de codage du type illustré sur la figure 1. En particulier, lors des étapes de sous-échantillonnage successives S11, S12, pour réduire le bruit de repliement spectral (ou « aliasing »), on applique un filtrage adaptatif (typiquement un filtre passe-bas pour la réduction d'aliasing) aux étapes respectives S112 et S122 qui suivent les étapes S111 et 5121 de sous-échantillonnage vers des résolutions inférieures, comme illustré sur les figures 2A et 2B à titre d'exemple. Bien entendu, les trois points de suspension sous la mention de la figure 2B signifient que d'autres sous-échantillonnages, suivis d'autres filtrages adaptatifs peuvent être prévus (et ainsi d'autres figures 2C, 2D, etc.) pour une diversité de résolutions selon un nombre supérieur à trois.

Les paramètres notamment des filtres adaptatifs (voire les types de filtres utilisés) peuvent être différents d'un sous-échantillonnage à l'autre, comme décrit ci-après.

Dans une forme de réalisation particulière, pour chaque image ou région d'image, le choix du type de filtre et des coefficients du filtre dont le type a été choisi est effectué selon des critères liés au contenu de la source ou au codage lui-même. Par exemple, ces critères de sélection du filtre peuvent être :
- la résolution d'image initiale (avant le sous-échantillonnage S11 ou S12 de la figure 1, nécessitant le filtrage dont le filtre est à choisir), ou « format » d'image ci-après,
- le nombre d'images par seconde dans le signal source (ou « fréquence » d'images ci-après),
- le débit de codage des images à transmettre (à l'étape S19 de la figure 1),
- l'importance à accorder dans une ou plusieurs régions d'intérêt dans l'image, une complexité de texture pouvant quantifier par exemple cette importance (et plus particulièrement la complexité liée à un codage de cette texture).

Le type de filtre peut être un filtre à réponse impulsionnelle finie, choisi parmi :
- Un filtre à fenêtre de Kaiser-Bessel,
- Un filtre bilinéaire,
- Un filtre bi-cubique,
- Ou encore un filtre d'interpolation avec un ou plusieurs plus proche(s) voisin(s).

On indique alors dans cette description que « le filtre est appliqué après sous-échantillonnage du signal » par un abus de langage. En réalité, un filtre à réponse impulsionnelle finie correspond à la convolution d'un signal d'entrée échantillonné par la réponse impulsionnelle du filtre donnant en sortie un signal sous-échantillonné et filtré. Ainsi, on peut parler en outre dans la présente description d'un « filtre de sous-échantillonnage ».

Les coefficients du filtre peuvent être choisis selon différents paramètres possibles du signal à filtrer. Par exemple, dans le cas d'une utilisation d'un filtre à fenêtre de Kaiser-Bessel, le choix des coefficients peut dépendre d'un paramètre tel que la résolution d'image avant sous-échantillonnage et/ou la fréquence d'images source.

Par exemple, on peut se référer à la table 1 ci-dessous montrant en grisé les choix optimums de jeux de coefficients de Kaiser-Bessel K-i en fonction de la résolution et de la fréquence d'images (la différence entre les situations A1 et A2 (ou entre les situations B1 et B2 ou B3 et B4) étant liée au type de scène représentée dans l'image (visage, ou paysage, ou autre).

Ces choix optimums minimisent le pourcentage (négatif) présenté dans la table 1, ce pourcentage quantifie l'optimisation de l'efficacité du codage *in fine* selon la métrique dite « de Bjontegaard ».

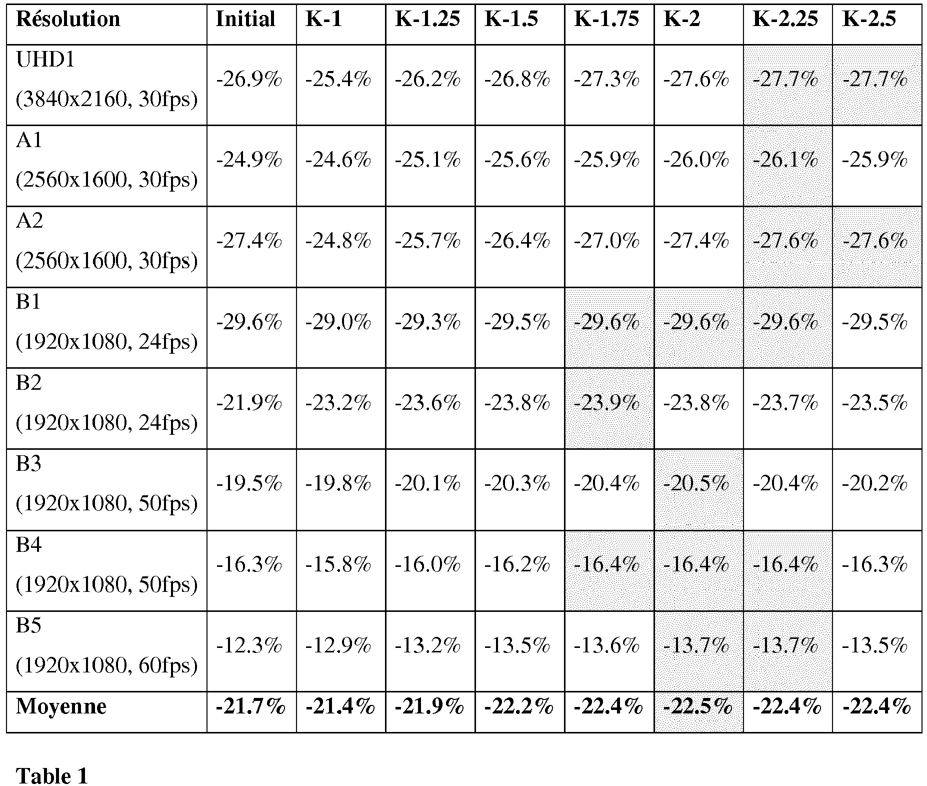

Ainsi par exemple, pour une résolution de 1920 sur 1080 pixels, et avec une fréquence de 24 trames par seconde (B1 ou B2 ci-dessus), on peut choisir par défaut le paramétrage de Kaiser-Bessel K-1.75 pour tout type de scène dans l'image. En revanche, pour une même résolution de 1920 sur 1080 pixels, mais avec une fréquence supérieure (de 50 ou 60 trames par seconde : B3 à B5), on peut choisir par défaut le paramétrage K-2.

Par ailleurs, pour une résolution supérieure à 1920 sur 1080 pixels (par exemple A1, A2 ou UHD), un paramétrage K-2.25 ou K2.5 peut être plutôt choisi.

On se réfère maintenant à la figure 3 pour décrire ci-après la sélection d'un ou plusieurs filtres parmi un ensemble de types de filtres à réponse impulsionnelle finie, à appliquer aux étapes de filtrage S112, S122 présentées précédemment.
Le flux de données d'image initiale S20 est pré-analysé à l'étape S21 pour déterminer typiquement :
- Une fréquence d'image initiale,
- La résolution avant sous-échantillonnage,
- Eventuellement un type de scène dans l'image avec en particulier une information quantifiant l'intérêt d'une ou plusieurs zones dans l'image, en déterminant quantitativement l'intérêt d'une zone d'image par exemple en fonction de la complexité de texture de cette zone.
Une information concernant le débit de codage des images peut être utile aussi. En effet, plus le débit est élevé et plus d'informations de l'image source doivent être conservées après filtrage S112, S122.

Ces informations de pré-analyse S21 peuvent être utilisées ensuite pour la sélection de filtre (ou de combinaison de filtres) à l'étape générale S30, en fonction d'estimations menées à l'étape générale S22 et basées sur les critères précités : fréquence, résolution, score de zones d'intérêt dans une image courante, débit de codage.

L'un des critères de sélection peut être une résolution/fréquence d'images dans le cadre de l'utilisation d'un filtre de Kaiser-Bessel. A l'étape S23, on obtient une information sur la résolution avant sous-échantillonnage et il est possible ainsi de sélectionner à l'étape S26 un paramétrage entre K-1.75 et K-2. Ensuite, on peut obtenir à l'étape précitée S23 en outre une donnée sur la fréquence d'images (par exemple 24 fps) et choisir alors définitivement K-1.75 à l'étape S27. Sinon (par exemple avec un débit 50 fps), on choisit plutôt K-2 à l'étape S27.

En complément ou alternativement, on peut choisir un paramétrage différent, de façon dynamique, en fonction de la scène et de sa complexité. Alternativement encore, on peut choisir un type de filtre encore différent (par exemple bi-cubique ou bilinéaire ou autre) en fonction de la complexité de l'image et typiquement en fonction d'un score de zones d'intérêt dans l'image à l'étape S28. Ces zones d'intérêt peuvent être identifiées dans l'image comme décrit plus loin (avec un score en fonction de la netteté et de la position de premier plan ou d'arrière plan de la zone), ou prédéfinies selon des blocs d'emplacements donnés dans l'image.

Par exemple, à l'étape de pré-analyse S21, on peut identifier des zones de l'image présentant un contraste ou une complexité de texture supérieurs ou au contraire inférieurs à un seuil à l'étape S24 (par exemple un visage net en premier plan, ou à l'opposé un ciel uniforme en arrière-plan) et assigner un score de complexité à chacune de ces zones à l'étape S28.

Plus particulièrement, on peut mesurer un intérêt d'une zone en amont du codage et du filtrage selon deux étapes de traitement :
- avec l'établissement d'abord d'une carte de profondeurs,
- et, sur chacun des plans identifiés, on peut ensuite détecter et quantifier un flou.

On peut donner ensuite des scores à chacune des régions d'intérêt selon leur catégorie, par exemple :
- 0 : Région au premier plan et nette,
- 1 : Région moyennement éloignée et nette,
- 2 : Région en arrière-plan et nette,
- 3 : Région au premier plan et floue,
- 4 : Région moyennement éloignée et floue,
- 5 : Région en arrière-plan et floue.

Pour chacun de ces scores, différents types de filtres peuvent être employés. Les régions moyennement éloignées sont toutes les régions comprises entre le premier plan et l'arrière-plan. Les régions avec un score inférieur ou égal à 1 peuvent être traitées par un filtre bicubique, celles avec un score compris entre 2 et 3 être traitées par un filtre bilinéaire, et enfin celles avec un score supérieur ou égal à 4 par un filtre d'interpolation. Pour les régions aux scores faibles (donc avec un intérêt fort), l'efficacité de codage est alors améliorée par rapport à un traitement n'employant qu'un seul filtre de sous-échantillonnage sur les couches de référence.

Ainsi, dans un tel exemple de réalisation, on peut alors sélectionner à l'étape S30 un filtre à appliquer à chaque zone d'image en fonction de son score déterminé à l'étape S28. Par exemple, une région avec un score inférieur ou égal à 1 peut être traitée avec un filtre bicubique à l'étape S33. Une région dont le score est compris entre 2 et 3 peut être filtrée avec un filtre bilinéaire à l'étape S32. Une région avec un score supérieur ou égal à 4 peut être traitée avec un filtre d'interpolation à l'étape S34.

Il est possible, en complément ou en variante, d'appliquer encore un autre critère pour le choix du type de filtre (dans des zones d'images complémentaires par exemple) en fonction du débit de codage des couches de référence (L0 ou L1). A l'étape S29, on peut comparer la valeur courante du débit de codage à un seuil prédéfini à l'étape S25. Par exemple lorsque le débit de codage dépasse un seuil de 2Mbits/sec à l'étape S29, un filtre bicubique S33 peut être utilisé. A l'inverse, quand le débit de codage est inférieur ou égal à 2Mbits/sec S29, un filtre bilinéaire peut être sélectionné à l'étape S32.

Selon un autre exemple, il peut être utile, lorsque le débit de codage varie, de paramétrer le seuil prédéfini selon un pourcentage du débit de codage attribué soit à la couche sur laquelle le filtre est appliqué, soit à l'ensemble des couches.

Bien entendu, on peut combiner les différents types de filtres qui sont appliqués d'une image à l'autre et choisir un filtre différent :
- d'une image à l'autre dans une succession d'images, ou
- d'une image à coder pour une couche Li à une image à coder pour une autre couche Lj,
- ou encore au sein d'une même image, d'une région de l'image à une autre région de l'image.

Plus généralement, la présente invention ne se limite pas aux formes de réalisation décrites ci-avant à titre d'exemples ; elle s'étend à d'autres variantes.

Ainsi, par exemple, on peut utiliser des filtres autres que de type à réponse impulsionnelle finie, l'essentiel étant qu'ils soient de type passe-bas pour « lisser les textures » et filtrer ainsi efficacement le bruit d'aliasing.

## Revendications

1. Procédé de codage de données d'image, scalable en résolution d'image, comportant les étapes :
- A partir d'un signal source de résolution d'image maximale, opérer un ou plusieurs sous-échantillonnages successifs vers une résolution d'image minimale, en vue de coder une couche de base (L0) correspondant à ladite résolution minimale, la couche de base (L0) servant de référence à une ou plusieurs couches de rehaussement (L1, L2) destinées à être utilisées pour un décodage auprès d'un terminal d'écran à résolution d'image supérieure à la résolution d'image minimale,
- A partir desdits sous-échantillonnages successifs, construire la couche de base (L0) et la ou les couches de rehaussement (L1, L2),
- Préparer un flux binaire codé, à transmettre, comportant des données de la couche de base et de la ou des couches de rehaussement,
**Caractérisé en ce que** l'étape de sous-échantillonnage comporte l'application d'un filtre passe-bas, adaptatif, aux données d'image issues du sous-échantillonnage pour limiter un effet de repliement spectral, et **en ce qu'**une pré-analyse d'image avant sous-échantillonnage est menée pour sélectionner un type de filtre adaptatif en fonction d'au moins une importance à accorder à une ou plusieurs régions d'intérêt dans chaque image courante.

2. Procédé selon la revendication 1, **caractérisé en ce que** le filtre adaptatif est de type à réponse impulsionnelle finie.

3. Procédé selon la revendication 2, **caractérisé en ce que** le filtre à réponse impulsionnelle finie est de type choisi parmi au moins :
- Un filtre à fenêtre de Kaiser-Bessel,
- Un filtre bicubique,
- Un filtre bilinéaire,
- Un filtre d'interpolation.

4. Procédé selon l'une des revendications précédentes, **caractérisé en ce que** le type de filtre adaptatif est sélectionné pour une image ou région d'image, en outre, selon au moins un critère parmi :
- Une résolution d'image avant sous-échantillonnage,
- Une fréquence d'images du signal source,
- Un débit de codage des images,

5. Procédé selon l'une des revendications précédentes, **caractérisé en ce que** l'importance à accorder à une région d'intérêt est quantifiée par un score de complexité de texture dans ladite région.

6. Procédé selon la revendication 5, **caractérisé en ce que** l'importance à accorder à une région d'intérêt dans une image courante est mesurée par :
- une détermination d'une carte de profondeurs dans l'image courante, pour identifier une pluralité de plans superposés,
- sur chacun des plans identifiés, une détection et une quantification de flou,
- l'attribution d'un score à une région en fonction :
* d'une profondeur du plan dans lequel se situe cette région, et
* une netteté de l'image dans ce plan.

7. Procédé selon la revendication 6, **caractérisé en ce que**, pour des régions nettes de premiers plans, un filtre bicubique est sélectionné, tandis que pour des régions d'arrière-plan nettes et/ou de premiers plans floues, un filtre bilinéaire est utilisé, et sinon un filtre d'interpolation est utilisé.

8. Procédé selon la revendication 4, **caractérisé en ce qu'**une gamme de paramétrages définissant des coefficients d'un filtre à fenêtre de Kaiser-Bessel est choisie en fonction de l'un des critères parmi une résolution d'image avant sous-échantillonnage et une fréquence d'images du signal source.

9. Procédé selon la revendication 8, **caractérisé en ce que** les coefficients du filtre à fenêtre de Kaiser-Bessel sont choisis en fonction d'un paramétrage sélectionné dans ladite gamme en fonction de l'autre desdits critères parmi une résolution d'image avant sous-échantillonnage et une fréquence d'images du signal source.

10. Procédé selon la revendication 4, **caractérisé en ce qu'**un filtre bicubique est sélectionné si le débit de codage de la couche de base est supérieur à un seuil, et sinon, un filtre bilinéaire est sélectionné.

11. Procédé selon la revendication 10, **caractérisé en ce que** le seuil est de 2 Mbits/sec.

12. Dispositif de codage de données d'image, scalable en résolution d'image, comportant un circuit de traitement pour la mise en œuvre du procédé selon l'une des revendications précédentes.

13. Programme informatique comportant des instructions pour la mise en œuvre du procédé selon l'une des revendications 1 à 11, lorsque lesdites instructions sont exécutées par un processeur d'un circuit de traitement.
